**Europäisches Patentamt**

**European Patent Office**

**Office européen des brevets**

(19)

(11) Veröffentlichungsnummer: **0 198 846**

**B1**

(12) # EUROPÄISCHE PATENTSCHRIFT

(45) Veröffentlichungstag der Patentschrift:
**02.11.88**

(21) Anmeldenummer: **85904789.6**

(22) Anmeldetag: **08.10.85**

(86) Internationale Anmeldenummer:
**PCT/CH 85/00148**

(87) Internationale Veröffentlichungsnummer:
**WO 86/02156 (10.04.86 Gazette 86/08)**

(51) Int. Cl.⁴: **G 01 D 5/249**, G 01 B 7/00, G 01 B 11/00, B 23 H 7/26

(54) **VORRICHTUNG ZUR BESTIMMUNG DER RELATIVEN POSITION ZWISCHEN ZWEI TEILEN ZWECKS STEUERUNG IHRER POSITION ODER VERSCHIEBUNG UND VERFAHREN ZUM BETRIEB DIESER VORRICHTUNG.**

(30) Priorität: **08.10.84 DE 3436843**

(43) Veröffentlichungstag der Anmeldung:
**29.10.86 Patentblatt 86/44**

(45) Bekanntmachung des Hinweises auf die Patenterteilung:
**02.11.88 Patentblatt 88/44**

(84) Benannte Vertragsstaaten:
**AT BE CH DE FR GB IT LI LU NL SE**

(56) Entgegenhaltungen:
**EP-A-0 099 797**
**DE-A-3 326 416**
**US-A-3 839 800**
**US-A-4 054 746**
**US-A-4 325 134**

(73) Patentinhaber: **AG für industrielle Elektronik AGIE Losone bei Locarno, CH- 6616 Losone/Locarno (CH)**

(72) Erfinder: **HERMANN, Ferdinand, Tegna, CH- 6652 Tegna (CH)**

(74) Vertreter: **EGLI- EUROPEAN PATENT ATTORNEYS, Horneggstrasse 4, CH- 8008 Zürich (CH)**

EP 0 198 846 B1

LIBER, STOCKHOLM 1988

## Beschreibung

Die Erfindung betrifft eine Vorrichtung zur Bestimmung der relativen Position zwischen zwei Teilen, insbesondere zwischen einem Werkstück und einem Werkzeug, zwecks Steuerung ihrer Position oder Verschiebung, sowie ein Verfahren zum Betrieb dieser Vorrichtung.

Die Steuerung der relativen Position oder Verschiebung zwischen Teilen unter Erreichung und Einhaltung einer Präzision in der Grössenordnung vom Mikrometer, insbesondere zwischen einem Werkstück und einem Werkzeug, beispielsweise zur spanabhebenden Metallbearbeitung in einer Werkzeugmaschine oder zur spanlosen Metallbearbeitung in einer Elektroerosionsmaschine, stellt den Fachmann vor Probleme, die unter anderem von der erforderlichen Präzision, Wiederholbarkeit und Zuverlässigkeit der Positionsmessung an sich sowie vom störenden Einfluss der Umweltbedingungen (Verschmutzung, elektrische und magnetische Felder usw.) und deren Schwankungen (thermisch bedingte Längenänderungen, periodische Verformungen durch Vibrationen, langsame plastische Verformungen durch angelegte Kräfte usw.) verursacht werden. Zur Ausschaltung solcher Fehlerquellen und zur Verbesserung der mit Maschinen erreichbaren geometrischen Präzision beispielsweise bei der Fertigung von Werkstücken sind bereits verschiedene Prinzipien herangezogen und verschiedene Verfahren und Vorrichtungen vorgeschlagen worden.

So ist beispielsweise unter Verwendung des Prinzips der magnetischen Speicherung von Daten bekannt (DE-20 907 175), die relative Verschiebung zwischen zwei Teilen, namentlich zwischen einem Werkstück und einem Werkzeug, mittels einer am einen Teil befestigten Magnetspur mit darauf aufgezeichneten periodischen Eichsignalen und zweier am zweiten Teil befestigter Magnetköpfe für das Ablesen der Magnetspur zu messen. Mittels einer besonders ausgebildeten Schaltung zur Erzeugung und Auswertung der abgelesenen Signale wird die Relativverschiebung inkrementell durch Impulse angegeben, wobei die erreichte Präzision angeblich etwa 5 Mikrometer pro Impuls beträgt. Dies genügt weder den heutzutage an die Präzision von beispielsweise Elektroerosionsmaschinen gestellen Anforderungen noch der erforderlichen Betriebssicherheit, da die auf der Magnetspur aufgezeichneten periodischen Signale einerseits Periodizitätsfehler aufweisen können und andererseits durch umweltbedingte zufällige elektromagnetische Einflüsse gestört oder gelöscht werden können.

Unter Verwendung des Prinzips der optischen Speicherung von Daten ist bekannt (DE-3 007 311, US-3 578 979), eine mit periodisch abwechselnd hellen und dunklen bzw. lichtdurchlässigen und lichtundurchlässigen Strichen versehene Skala mittels der Kombination einer Lichtquelle und einen Detektoranordnung abzulesen, wobei die Skala auf dem einen Teil und die Lichtquelle sowie die Detektoranordnung auf dem anderen Teil, zwischen denen die relative Verschiebung zu messen ist, befestigt ist. Das Resultat ist eine inkrementelle Positionsbestimmung. Mit einer besonderen Ausbildung der Skala mit mehreren Abtastspuren und einer besonderen Ausbildung der Detektoranordnung mit Abtastfeldern, die den Inkrementen der periodischen Skalen entsprechen und zueinander phasenverschoben sind, wird eine Interpolation der Inkremente ermöglicht und dadurch die erreichbare Präzision erhöht. Mit eine derartigen Vorrichtung beträgt die erreichte Präzision angeblich etwa 1 Mikrometer pro Impuls, insbesondere wenn durch Bildung von Moir-Streifen eine Interpolation der Skalenteilung stattfindet (US-3 779 647). Die Funktionstüchtigkeit dieser Art von Vorrichtungen ist jedoch anfällig für Verschmutzung. Auch sind deren Herstellung und Justierung schwierig, also auch kostspielig, und zwar derart, dass zur Minderung dieser Nachteile beispielsweise vorgeschlagen wurde (EP-102 472), die Detektorenanordnung auf besondere Weise direkt auf der Maschine, wo sie verwendet wird, mittels einer mechanischen Vorrichtung justierbar zu gestalten. Eine solche Lösung ist wiederum in bezug auf den Einfluss von Vibrationen nicht zufriedenstellend. Auch das exakte Befestigen der fertigen Skala auf die Maschine wirft Probleme auf, zu deren Beseitigung beispielsweise vorgeschlagen wurde (EP-48 487), das Codemuster erst nach dem Anbringen des Skalenträgers auf die Maschine zu schaffen, um auf diese Weise Exzentrizitätsfehler zu vermeiden. Eine solche Lösung ist aber ein kostspieliges, in den Ablauf der Maschinenherstellung nicht leicht zu integrierendes Vorgehen.

Es wurde noch vorgeschlagen, die gewünschte Präzision der relativen Positionsbestimmung unter Verwendung des Prinzips der Interferometrie zu erreichen (US-3 409 375). Dazu ist aber Laserlicht von hoher Kohärenz und guter Bündelung erforderlich, was entsprechend kostspielig ist. Zur Überwindung einiger bei der Messung von grossen Längen und Wegen aufgeworfener Problem wurden besondere Lösungen vorgeschlagen (US-3 884 580, US-4 195 412), die jedoch einen entsprechenden Aufwand erfordern. Auch ist in der Laser-Interferometrie die gelieferte Präzision im Grössenbereich von etwa 25 Nanometer allzu hoch, in dem Sinne, dass die Messmethode allzu sehr auf Störung durch Vibrationen anfällig ist. Die Interfenzstreifen sind nicht voneinander unterscheidbar und daher nur inkrementell zählbar, so dass jede Vibration der Maschine und jede beispielsweise thermisch bedingte Änderung des Brechungsindexes der Luft auf dem Weg des Lichtstrahles zu Falschzählungen der Inkremente führt. Die entsprechenden Lösungen zum Überwinden dieser Probleme in metallverarbeitenden Maschinen sind aufwendig (US-3 520 613, US-3 708 657, US-4 365 301).

Generell stellt sich das Problem, dass zur Erreichung der gewünschten Präzision die zusammenwirkenden Teile der Messvorrichtung direkt auf den Teilen angeordnet und befestigt werden sollten, deren relative Position zu bestimmen ist. Es ist nämlich bekannt, in einer metallverarbeitenden Maschine eine Codierscheibe auf eine Welle anzuordnen und die Drehung oder Drehlage dieser Welle mit Präzision zu messen (US-3 983 391): im Getriebe, das die Bewegung und Lage dieser Welle auf das entsprechende Teil (Werkstück oder Werkbank) überträgt, geht jedoch die Präzision verloren. Zudem wird die Steuerung der relativen Bewegung der Teile durch die Getriebelose, d. h. die dem Spiel im Getriebe entsprechende Totstrecke des Teiles bei Richtungsumkehr der Welle, beeinträchtigt, es entsteht eine der Getriebelose und der Totstrecke entsprechende Positionsunsicherheit. Es wurde daher vorgeschlagen (US-3 736 818, US-4 221 995), die mechanischen Übertragungen auszulassen bzw. durch hydraulische Antriebe oder Linearmotoren zu ersetzen. Diese Massnahmen können zur erwünschten Präzision beitragen, ergeben die Präzision von sich aus aber nicht.

Aufgabe der Erfindung ist es, einen neuartigen Weg aufzuzeigen, mit dem die Steuerung der relativen Position oder Verschiebung zwischen Maschinenteilen unter Erreichung und Einhaltung einer Präzision in der Grössenordnung vom Mikrometer unter vertretbarem Aufwand erreichbar ist, eine entsprechende Vorrichtung zu schaffen und ein Verfahren zum Betrieb dieser Vorrichtung vorzuschlagen. Insbesondere soll zwischen einem Werkstück und einem Werkzeug, beispielsweise zur spanabhebenden Metallbearbeitung in einer Werkzeugmaschine oder zur spanlosen Metallbearbeitung in einer Elektroerosionsmaschine, die Wiederholbarkeit und Zuverlässigkeit der Positionsmessung an sich im Bereich des Mikrometers liegen sowie vom störenden Einfluss der Umweltbedingungen und deren Schwankungen weitgehend befreit sein.

Diese Aufgabe wird bei der eingangs genannten Vorrichtung erfindungsgemäss so gelöst, wie dies im Anspruch 1 definiert ist.

Nachstehend sind Ausführungsbeispiele der vorliegenden Erfindung anhand der beiliegenden Zeichnung näher erläutert. Es zeigt:

Fig. 1  schematisch die vorliegende Vorrichtung,

Fig. 2  in Draufsicht eine Ausführungsform der Vorrichtung, die sich eines scheibenförmigen Datenträgers bedient, und

Fig. 3  in Draufsicht eine Ausführungsform der Vorrichtung, die sich eines linearen Datenträgers bedient.

Die vorliegende Vorrichtung umfasst eine Bearbeitungsmaschine 1, welche beispielsweise eine Elektroerosionsmaschine sein kann. Eine solche Maschine 1 weist einen praktisch U-förmigen Rahmen auf, der auf einem seiner Schenkel 2 liegt. Auf der Oberseite des unteren Schenkels 2 befindet sich ein Tisch 3, auf dem ein Werkstück 4 befestigt ist, das mit Hilfe eines Werkzeuges 5 bearbeitet wird. Dieses Werkzeug 5 ist an einem Ende eines Halters 6 befestigt, der im oberen Schenkel 7 des Rahmens der Maschine 1 beweglich angeordnet ist. Der Halter 6 kann sowohl in der vertikalen als auch in der horizontalen Richtung nach Massgabe eines die Bearbeitung des Werkstückes 4 steuernden Programmes bewegt werden. Oberhalb des Werkzeuges 5 ist am Halter ein Datenträger 10 angeordnet. Dieser Datenträger 10 kann am Halter 6 starr befestigt sein oder er kann mittels eines Getriebes 11 an den Halter 6 angeschlossen sein. Dieses Getriebe enthält auch einen Antrieb (nicht dargestellt), so dass der Datenträger 10 bewegt werden kann, auch wenn der Halter 6 und somit auch die Elektrode 5 stillstehen.

Dem Datenträger 10 ist ein Abtastkopf 15 zugeordnet, und zwar vorteilhaft von der unteren Seite desselben, wobei dieser Abtastkopf 15 in bezug auf den Datenträger 10 bewegbar ist.

Der Abtastkopf 15 befindet sich in einem Schlitten 16, der mit dem unteren Schenkel 2 des Maschinenrahmens verbunden ist. Unter Umständen kann der Schlitten 16 aber auch mit dem Werkstück 4 fest verbunden sein. Der Abtastkopf 15 ist an eine Auswerteschaltung 17 angeschlossen, in der die vom Abtastkopf 15 gelesenen Daten verarbeitet werden. Die entsprechenden Signale werden über eine Leitung 18 an den Antrieb 20 des Halters 6 abgegeben, so dass dieser Antrieb 20 den Halter 6 unter der Berücksichtigung sowohl der Befehle des Programmes als auch der Signale aus der Auswerteschaltung 17 steuern kann.

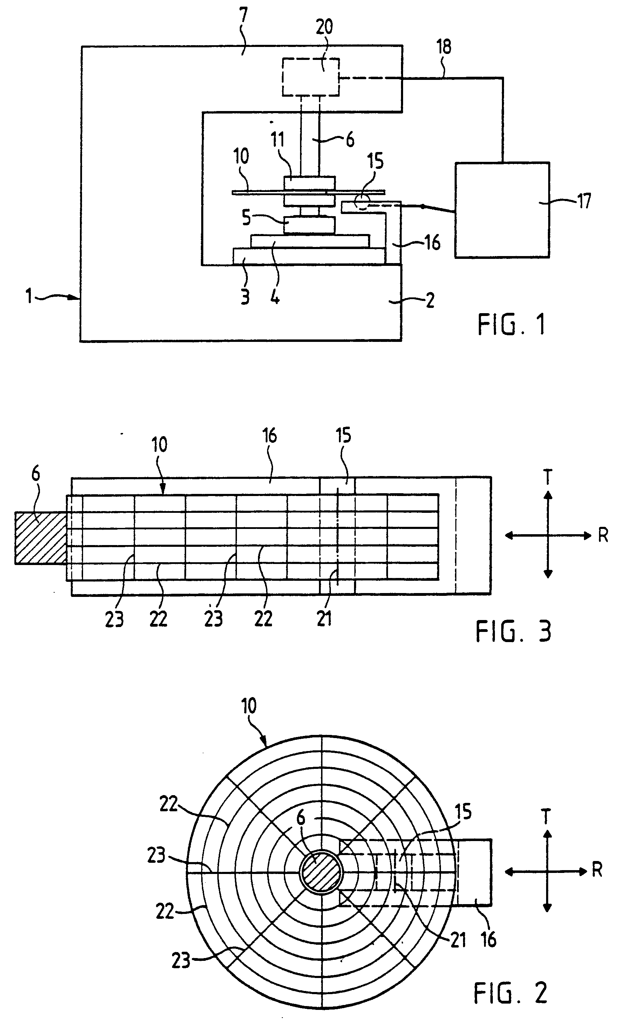

Fig. 2 zeigt in Draufsicht einen scheibenförmigen Datenträger 10, der am Halter 6 starr befestigt ist. Der Schlitten 16 trägt den Abtastkopf 15, dessen Abtastspalt 21 durch eine strichpunktierte Linie angedeutet ist. Der Datenträger 10 weist konzentrisch verlaufende Spuren 22 auf, in welchen die Daten magnetisch, optisch oder dgl. eingeschrieben sind. Die Spuren 22 des Datenträgers 10 sind in Sektoren 23 unterteilt. In diese Spuren 22 und Sektoren 23 sind Informationen eingeschrieben, welche eine eindeutige Identifikation des betreffenden Sektors 23 und der betreffenden Spur 22 ermöglichen.

Zur Abtastung der Daten vom Träger 10 kann der Schlitten 16, in dem der Abtastkopf 15 verschiebbar gelagert ist, entweder in radialer Richtung R oder in tangentialer Richtung T oder in den beiden Richtungen gleichzeitig bewegt werden, bzw. schwingen.

Der Datenträger 10 kann allerdings auch linear ausgeführt sein, wie dies in Fig. 3 schematisch dargestellt ist. Ein solcher Datenträger 10 ist als ein Streifen ausgeführt, wobei das eine Ende dieses Streifens am Halter 6 befestigt ist. Unter diesem Datenträger 10 befindet sich der Abtastkopf 15 mit dem Abtastspalt 21, der im Schlitten 16 beweglich gelagert ist. Auch in diesem Fall kann der Schlitten 16 in Richtung T oder/und R bewegt werden.

Zur Bestimmung der Position von Maschinenteilen wird zunächst auf einem magnetisch oder optisch lesbaren, in Aufzeichnungsspuren und -sektoren aufgeteilten Datenträger eine Information gespeichert, die bei jedem Sektor in jeder Spur eine eindeutige Identifikation des betreffenden Sektors und der betreffenden Spur bildet. Dabei kann der Datenträger plattenförmig oder linear ausgebildet sein, um - entsprechend der vorliegenden Ausbildung - zur Positionierung von Maschinenteilen in bezug auf Dreh- bzw. Längsbewegungen verwendet zu werden. Die Art der Datenspeicherung ist an sich bekannt, beispielsweise in der Form einer Folge von magnetisierten Domänen auf einem magnetisierbaren Träger für magnetisch lesbare Daten oder in der Form einer Folge von eingebrannten Löchern oder nichtspiegelnden Stellen auf einem spiegelglatten Träger für optisch lesbare Daten.

Danach wird der Infomationsträger auf dem einen Maschinenteil befestigt, während der entsprechende Lesekopf - je nach Art der Datenaufzeichnung ein magnetischer oder ein optischer Lesekopf von an sich bekannter Art wie beispielsweise für magnetische Platten (beispielsweise sogenannte Disketten und Winchesterplatten) oder für optische Platten (beispielsweise sogenannte Videodiscs) - auf dem anderen Maschinenteil befestigt ist. Die betreffenden Maschinenteile sind diejenigen, zwischen denen die relative Position zu messen bzw. die Bewegung zu steuern ist, und der Lesekopf ist in bezug auf den Datenträger auf solche Art angeordnet, dass ein einwandfreies Lesen des Datenträgers durch den Lesekopf gewährleistet wird, was beispielsweise aus der Technik der Datenspeicherung auf magnetischen oder optischen Platten ebenfalls an sich bekannt ist. Dem Lesekopf ist innerhalb der Vorrichtung zur Bestimmung der relativen Position zwischen den Maschinenteilen eine übliche Auswerteschaltung zur Umwandlung der Signale des Lesekopfes in weiter verarbeitbare binäre Signale nachgeschaltet.

Zur Gewährleistung einer ständigen Datenabgabe vom Lesekopf an die Auswerteschaltung mit dem Zweck, dass eine daran angeschlossene Steuerung für die relative Position bzw. Bewegung der Maschinenteile ständig mit Positionssignalen beliefert wird, kann mittels eines Antriebes eine ständige relative Bewegung des Lesekopfes in bezug auf den Datenträger auch bei relativem Stillstand der Maschinenteile zueinander vorgesehen werden. In einer Ausbildungsvariante kann der Datenträger drehsymmetrisch, beispielsweise in der Form einer mittels des Antriebes konstant rotierenden Platte oder eines mittels des Antriebes konstant rotierenden Ringes ausgebildet sein, was die ständige relative Bewegung des Lesekopfes zur Platte gewährleistet. Die der relativen Bewegung der Maschinenteile zueinander entsprechende relative Bewegung des Lesekopfes zur Platte erfolgt in diesem Falle im wesentlichen radial zur Platte, wobei eine geringe Abweichung von der radial gerichteten Bewegung (beispielsweise eine Abweichung von weniger als 10 Winkelgrad) mit Absicht zum Zwecke der Schaffung einer interpolierenden Feineinstellung (Feinbewegung im trigonometrischen Verhältnis zum Abweichungswinkel) vorgesehen werden kann. In einer anderen Ausbildungsvariante kann der Datenträger beispielsweise in der Form eines am einen Maschinenteil feststehenden geradlinigen Bandes ausgebildet sein, und der Lesekopf ist dann am anderen Maschinenteil mittels des Antriebes so angeordnet, dass er periodisch um eine mittlere Stellung schwingt und sich dabei gegenüber dem Datenträger periodisch bewegt, und zwar auch bei relativem Stillstand der Maschinenteile zueinander.

Bei dieser letztgenannten Ausbildungsvariante gibt es zwei Ausführungsmöglichkeiten. In der einen Ausführung erfolgt die periodische Bewegung des Lesekopfes in gleicher Richtung wie die zu erfassende Relativbewegung der Maschinenteile zueinander, also sozusagen in Längsrichtung des Datenträgers, auf dem die Daten ebenfalls in dieser Längsrichtung und linear, das heisst eindimensional (aber noch immer in Sektoren unterteilt) aufgezeichnet sind. Bei der periodischen Längsbewegung des Lesekopfes überstreicht dieser mindestens einen Sektor mit darauf gespeicherten und diesen Sektor identifizierenden Daten, die von der Vorrichtung ständig verarbeitet und an die Steuerung weitergegeben werden, was die sichere Steuerung der Position gewährleistet. Diese Ausführung ist eher im Zusammenhang mit einer schnellen Grobpositionierung verwendbar, da die Auflösung dadurch vermindert wird, dass die Datensektoren linear aneinandergereiht sind und jeder Datensektor je eine Position definiert. Allerdings ist bei geeigneter Codierung der in den einzelnen Datensektoren gespeicherten Daten eine Interpolation durchführbar und diese Ausführung dann auch zur Feinpositionierung verwendbar.

In der anderen Ausführung erfolgt die periodische Bewegung des Lesekopfes in einer Richtung, die im wesentlichen senkrecht zur Richtung der zu erfassenden Relativbewegung der Maschinenteile zueinander liegt, also sozusagen quer zur Längsrichtung des Datenträgers, der seinerseits zweidimensional mit Daten versehen ist, das heisst mit in Querrichtung des Datenträgers sich erstreckenden Sektoren, die in Längsrichtung des Datenträgers parallel zueinander und nebeneinander angeordnet liegen. Bei der periodischen Querbewegung des Lesekopfes überstreicht dieser einen Sektor mit darauf gespeicherten und diesen identifizierenden Daten, die von der Vorrichtung ständig verarbeitet und an die Steuerung weitergegeben werden, was die sichere Steuerung der Position gewährleistet. Wohlverstanden kann die Querbewegung des Lesekopfes entweder streng geradlinig oder auch kreisbogenförmig erfolgen, je nachdem, ob der Lesekopf zur Gewährleistung seiner Bewegung beispielsweise auf einem Schlitten oder auf einem Schwenkarm (beispielsweise an dessen Ende) befestigt ist.

Wohlverstanden können, in Weiterbildung des allgemeinen Erfindungsgedankens der kinematischen Umkehr, der Lesekopf am einen Maschinenteil festehend und der Datenträger am anderen Maschinenteil periodisch bewegbar befestigt sein. Im wesentlichen sind dabei die vorangehenden Ausführungen anwendbar, wenn darin die Begriffe "Lesekopf" und "Datenträger" untereinander vertauscht werden.

Zum Betrieb der beschriebenen Vorrichtung zur Bestimmung der relativen Position zwischen zwei Maschinenteilen zwecks Steuerung ihrer Position oder Verschiebung werden folgenden Verfahrensschritte ausgeführt: Speichern von Daten auf einen magnetisch oder optisch lesbaren, in Aufzeichnungsspuren und -sektoren aufgeteilten Datenträger, wobei die Daten derart codiert sind, dass die auf jedem Sektor in jeder Spur gespeicherten Daten eine eindeutige Identifikation des betreffenden Sektors und der betreffenden Spur ermöglichen; Ablesen des auf dem einen Maschinenteil angeordneten Datenträgers mittels des auf dem anderen Maschinenteil angeordneten Lesekopfes; und Zuordnen der abgelesenen Daten zu einem Messwert der relativen Position der Maschinenteile zueinander, welcher Messwert zur Steuerung der Position oder Verschiebung der Maschinenteile zueinander verwendbar ist.

**Patentansprüche**

1. Vorrichtung zur Bestimmung der relativen Position zwischen zwei Maschinenteilen insbesondere zwischen einem Werkstück und einem Werkzeug, zwecks Steuerung ihrer Position oder Verschiebung, gekennzeichnet durch einen magnetisch oder optisch lesbaren, in Aufzeichnungsspuren und -sektoren auf geteilten Datenträger, auf dem eine Information gespeichert ist, die bei jedem Sektor in jeder Spur eine eindeutige Identifikation des betreffenden Sektors und der betreffenden Spur ermöglicht, welcher Datenträger auf dem einen Maschinenteil angeordnet ist, während ein entsprechender Lesekopf auf dem anderen Maschinenteil angeordnet ist.

2. Vorrichtung nach Anspruch 1 ,dadurch gekennzeichnete dass der Datenträger plattenförmig ausgebildet ist.

3. Vorrichtung nach Anspruch 1, dadurch gekennzeichnet, dass der Datenträger linear ausgebildet ist.

4. Vorrichtung nach einem der Ansprüche 1 bis 3, dadurch gekennzeichnete dass der Datenträger auf dem einen Maschinenteil und der entsprechende Lesekopf auf dem anderen Maschinenteil feststehend angeordnet sind.

5. Vorrichtung nach einem der Ansprüche 1 bis 3,dadurch gekennzeichnet, dass der Datenträger am einen der Maschinenteile angeordnet ist und der Lesekopf am anderen Maschinenteil mittels eines Antriebes so angeordnet und befestigt ist, dass er in eine standige relative Bewegung in bezug auf den Datenträger auch bei relativem Stillstand der Maschinenteile zueinander versetzbar ist.

6. Vorrichtung nach Anspruch 5, dadurch gekennzeichnet, dass der Datenträger drehsymmetrisch ausgebildet und am entsprechenden Maschinenteil konstant rotierend angeordnet ist.

7. Vorrichtung nach Anspruch 6, dadurch gekennzeichnet, dass der Lesekopf in bezug auf den Datenträger im wesentlichen radial zu diesem bewegbar ist.

8. Vorrichtung nach Anspruch 6, dadurch gekennzeichnet, dass der Lesekopf in bezug auf den Datenträger um weniger als 10 Winkelgrad von der radialen Richtung abweichend bewegbar ist.

9. Vorrichtung nach Anspruch 5, dadurch gekennzeichnet, dass der Datenträger in der Form eines am einen Maschinenteil feststehenden geradlinigen Bandes ausgebildet ist und der Lesekopf am anderen Maschinenteil mittels eines Antriebes so angeordnet ist, dass er periodisch um eine mittlere Stellung in Schwingung versetzbar und dabei auch bei relativem Stillstand der Maschinenteile zueinander gegenüber dem Datenträger in eine periodische Bewegung versetzbar ist.

10. Vorrichtung nach Anspruch 9, dadurch gekennzeichnet, dass der Datenträger mit seiner Längsrichtung im wesentlichen parallel zur Richtung der relativen Bewegung der Maschinenteile angeordnet ist, dass er mit parallel zu seiner Längsrichtung eindimensional aufgezeichneten Daten versehen ist, und der Lesekopf ebenfalls parallel zu dieser Richtung bewegbar ist

11. Vorrichtung nach Anspruch 9, dadurch gekennzeichnet, dass der Datenträger mit seiner Längsrichtung im wesentlichen parallel zur Richtung der relativen Bewegung der Maschinenteile angeordnet ist, dass er auf im wesentlichen senkrecht zu dieser Richtung sich erstreckenden Sektoren, die parallel zueinander und nebeneinander in Längsrichtung des Datenträgers angeordnet liegen, mit gespeicherten Daten versehen ist, und der Lesekopf ebenfalls senkrecht zu dieser Richtung bewegbar ist

12. Vorrichtung nach Anspruch 11, dadurch gekennzeichnet, dass die Sektoren sowie die Bewegung des Lesekopfes geradlinig verlaufen.

13. Vorrichtung nach Anspruch 12, dadurch gekennzeichnet, dass der Lesekopf auf einem Schlitten angeordnet ist.

14. Vorrichtung nach Anspruch 11, dadurch gekennzeichnet, dass die Sektoren sowie die Bewegung des Lesekopfes kreisbogenförmig verlaufen.

15. Vorrichtung nach Anspruch 14, dadurch gekennzeichnet, dass der Lesekopf auf einem Schwenkarm angeordnet ist.

16. Vorrichtung nach einem der Ansprüche 1 bis 3, dadurch gekennzeichnet, dass der Lesekopf am einen der Maschinenteile angeordnet ist und der Datenträger am anderen Maschinenteil mittels eines Antriebes so angeordnet und befestigt ist, dass er in eine ständige relative Bewegung in bezug auf den Lesekopf auch bei relativem Stillstand der Maschinenteile zueinander versetzbar ist.

17. Vorrichtung nach Anspruch 16, dadurch gekennzeichnet, dass der Datenträger drehsymmetrisch ausgebildet und am entsprechenden Maschinenteil konstant rotierend angeordnet ist.

18. Vorrichtung nach Anspruch 17, dadurch gekennzeichnet, dass der Datenträger in bezug auf den Lesekopf im wesentlichen radial zu diesem bewegbar ist.

19. Vorrichtung nach Anspruch 17, dadurch gekennzeichnet, dass der Datenträger in bezug auf den Lesekopf um weniger als 10 Winkelgrad von der radialen Richtung abweichend bewegbar ist.

20. Vorrichtung nach Anspruch 16, dadurch gekennzeichnet, dass der Lesekopf am einen Maschinenteil feststehend angeordnet ist, und dass der Datenträger in der Form eines geradlinigen Bandes ausgebildet und am anderen Maschinenteil mittels eines Antriebes so angeordnet ist, dass er periodisch um eine mittlere Stellung in Schwingung versetzbar und dabei auch bei relativem Stillstand der Maschinenteile zueinander gegenüber dem Lesekopf in eine periodische Bewegung versetzbar ist.

21. Vorrichtung nach Anspruch 20, dadurch gekennzeichnet, dass der Datenträger mit seiner Längsrichtung im wesentlichen parallel zur Richtung der relativen Bewegung der Maschinenteile angeordnet, mit parallel zu seiner Längsrichtung eindimensional aufgezeichneten Daten versehen und ebenfalls parallel zu dieser Richtung bewegbar ist.

22. Vorrichtung nach Anspruch 20, dadurch gekennzeichnet, dass der Datenträger mit seiner Längsrichtung im wesentlichen parallel zur Richtung der relativen Bewegung der Maschinenteile angeordnet, auf im wesentlichen senkrecht zu dieser Richtung sich erstreckenden Sektoren, die parallel zueinander und nebeneinander in Längsrichtung des Datenträgers angeordnet liegen, mit gespeicherten Daten versehen und ebenfalls senkrecht zu seiner Längsrichtung bewegbar ist.

23. Vorrichtung nach Anspruch 22, dadurch gekennzeichnet, dass die Sektoren sowie die Bewegung des Datenträgers geradlinig verlaufen.

24. Vorrichtung nach Anspruch 23, dadurch gekennzeichnet, dass der Datenträger auf einem Schlitten angeordnet ist.

25. Vorrichtung nach Anspruch 22, dadurch gekennzeichnet, dass die Sektoren sowie die Bewegung des Datenträgers kreisbogenförmig verlaufen.

26. Vorrichtung nach Anspruch 25, dadurch gekennzeichnet, dass der Datenträger auf einem Schwenkarm angeordnet ist.

27. Verfahren zum Betrieb der Vorrichtung nach Anspruch 1, gekennzeichnet durch Speichern von Daten auf einen magnetisch oder optisch lesbaren, in Aufzeichnungsspuren und -sektoren aufgeteilten Datenträger, wobei die Daten derart codiert sind, dass die auf jedem Sektor in jeder Spur gespeicherten Daten eine eindeutige Identifikation des betreffenden Sektors und der betreffenden Spur ermöglichen, Ablesen des auf dem einen Maschinenteil angeordneten Datenträgers mittels des auf dem anderen Maschinenteil angeordneten Lesekopfes und Zuordnen der abgelesenen Daten zu einem Messwert der relativen Position der Maschinenteile zueinander, welcher Messwert zur Steuerung der Position oder Verschiebung der Maschinenteile zueinander verwendbar ist.

**Claims**

1. Unit for determining the relative position between two machine parts, particularly between a workpiece and a tool, for controlling the position or displacement thereof, characterized by a magnetically or optically readable data medium subdivided into recording tracks and sectors and on which an information is stored, permitting for each sector in each track a clear identification of the particular sector and the particular track, said data medium being placed on one machine part, whilst a corresponding reading head is placed on the other machine part.

2. Unit according to claim 1, characterized in that the data medium has a disc-like construction.

3. Unit according to claim 1, characterized in that the data medium has a linear construction.

4. Unit according to one of the claims 1 to 3, characterized in that the data medium is arranged in fixed manner on one machine part and the corresponding reading head is arranged in fixed manner on the other machine part.

5. Unit according to one of the claims 1 to 3, characterized in that the data medium is arranged on one of the machine parts and the reading head is so arranged and fixed on the other machine part by means of a drive, that it can be given a continuous relative movement with respect to the data medium, even then the machine parts are mutually stationary.

6. Unit according to claim 5, characterized in that the data medium is constructed in rotationally symmetrical manner and is arranged in constantly rotating manner on the corresponding machine part.

7. Unit according to claim 6, characterized in that the reading head is movable in a substatially radial manner with respect to the data medium.

8. Unit according to claim 6. characterized in that the reading head is movable with respect to the data medium, whilst diverging by less than 10 angular degrees from the radial direction.

9. Unit according to claim 5, characterized in that the data medium is constructed in the form of a linear strip filed to one machine part and the reading head is so arranged on the other machine part by means of a drive, that it can be periodically oscillated about a central position and can be given a periodic movement relative to the data medium, even when the machine parts are mutually stationary.

10. Unit according to claim 9, characterized in that the longitudinal direction of the data medium is substantially parallel to the direction of the relative movement of the machine parts, has unidimensionally recorded data parallel to its longitudinal direction, whilst the reading head is also movable parallel to this direction.

11. Unit according to claim 9, characterized in that the longitudinal direction of the data medium is substantially parallel to the direction of the relative movement of the machine parts, is provided with stored data on sectors extending substantially at right angles to said direction, which are parallel to one another and are juxtaposed in the longitudinal direction of the data medium and the reading head is also movable at right angles to this direction.

12. Unit according to claim 11, characterized in that the sectors and the movement of the reading head are linear.

13. Unit according to claim 12, characterized in that the reading head is arranged on a slide.

14. Unit according to claim 11, characterized in that the sectors and movement of the reading head are arcuate.

15. Unit according to claim 14, characterized in that the reading head is placed on a pivot arm.

16. Unit according to one of the claims 1 to 3, characterized in that the reading head is arranged on one of the machine parts and the data medium is so arranged and fixed on the other machine part by means of a drive, that it can be given a constant relative movement with respect to the reading head, even when the machine parts are mutually stationary.

17. Unit according to claim 16, characterized in that the data medium is constructed in rotationally symmetrical manner and is arranged in constantly rotating manner on the corresponding machine part.

18. Unit according to claim 17, characterized in that the data medium is movable in a substantially radial manner with respect to the reading head.

19. Unit according to claim 17, characterized in that with respect to the reading head, the data medium diverges by less than 10 angular degrees from the radial direction.

20. Unit according to claim 16, characterized in that the reading head is arranged in fixed manner on one machine part and that the data medium is constructed in the form of a linear strip and is so arranged on the other machine part by means of a drive, that it can be made to periodically oscillate about a central position and even when the machine parts are mutually stationary can be given a periodic movement with respect to the reading head.

21. Unit according to claim 20, characterized in that the longitudinal direction of the data medium is substantially parallel to the direction of the relative movement of the machine parts, being provided with unidimensionally recorded data parallel to its longitudinal direction and is also movable parallel to said direction

22. Unit according to claim 20, characterized in that the longitudinal direction of the data medium is substantially parallel to the direction of the relative movement of the machine parts and is provided with stored data on sectors extending substantially at right angles to said direction, which are arranged parallel an juxtaposed to one another in the longitudinal direction of the data medium and is also movable at right angles to its longitudinal direction.

23. Unit according to claim 22, characterized in that the sectors and the movement of the data medium are linear.

24. Unit according to claim 23, characterized in that the data medium is arranged on a slide.

25. Unit according to claim 22, characterized in that the sectors and movement of the data medium are arcuate.

26. Unit according to claim 25, characterized in that the data medium is arranged on a pivot arm.

27. Method for operating the unit according to claim 1, characterized by storing data on a magnetically or optically readable data medium subdivided into recording tracks and sectors, the data being coded in such a way that the data stored on each sector in each track permit a clear identification of the particular sector and the particular track, reading the data medium arranged on one machine part by means of the reading head arranged on the other machine part and associating the data read with a measured value of the relative reciprocal position of the machine parts, said measured value being used for controlling the relative position or displacement of the machine parts.

## Revendications

1. Dispositif pour la détermination de la position relative de deux pièces de machine l'une par rapport à l'autre, en particulier d'une pièce à usiner et d'un outil, en vue de commander leur position ou leur déplacement, dispositif caractérisé par un support de données lisible magnétiquement ou optiquement, subdivisé en pistes et secteurs d'enrregistrement, et et sur lequel une information est enregistrée qui permet pour chaque secteur dans chaque piste d'identifier de façon univoque ce secteur particulier et cette piste particulière, ce support de données étant disposé sur l'une des pièces de machine tandis qu'une tête de lecture correspondante est disposée sur l'autre pièce de machine.

2. Dispositif selon la revendication 1, caractérisé en ce que le support de données est réalisé en forme de disque.

3. Dispositif selon la revendication 1, caractérisé en ce que le support de données est réalisé sous forme linéaire.

4. Dispositif selon l'une des revendications 1 à 3, caractérisé en ce que le support de données est disposé de manière fixe sur l'une des pièces de machine et la tête de lecture correspondante est disposée de manière fixe sur l'autre partie de machine.

5. Dispositif selon l'une des revendications 1 à 3, caractérisé en ce que le support de données est disposé sur l'une des pièces de machine et la tête de lecture est disposée et fixée au moyen d'un entraînement de manière telle sur l'autre pièce de machine qu'on peut lui imposer continuellement un mouvement relatif par rapport au support de données même lorsque les pièces de machine sont stationnaires l'une par rapport à l'autre.

6. Dispositif selon la revendication 5, caractérisé en ce que le support de données est réalisé de façon à présenter une symétrie de rotation et qu'il est disposé en rotation constante sur la pièce de machine correspondante.

7. Dispositif selon la revendication 6, caractérisé en ce que la tête de lecture est déplaçable d'une façon essentiellement radiale par rapport au support de données.

8. Dispositif selon la revendication 6, caractérisé en ce que la tête de lecture est déplaçable par rapport au support de données d'une façon qui diverge de moins de 10 degrés par rapport à la direction radiale.

9. Dispositif selon la revendication 5, caractérisé en ce que le support de données est réalisé sous forme d'une bande rectiligne fixe par rapport à l'une des pièces de machine et que la tête de lecture est disposée au moyen d'un entrainement de manière telle sur l'autre pièce de machine qu'on peut lui imposer une oscillation périodique autour d'une position moyenne et que ce faisant on peut lui imposer un mouvement périodique par rapport au support de données même lorsque les pièces de machine sont stationnaires l'une par rapport à l'autre.

10. Dispositif selon la revendication 9, caractérisé en ce que le support de données est disposé avec sa direction longitudinale essentiellement parallèle à la direction du mouvement relatif des pièces de machine, qu'il est muni de données enregistrées de façon unidimensionnelle parallèlement à sa direction longitudinale et que la tête de lecture peut elle aussi être déplacée parallèlement à cette direction.

11. Dispositif selon la revendication 9, caractérisé en ce que le support de données est disposé avec sa direction longitudinale essentiellement parallèle à la direction du mouvement relatif des pièces de machine, qu'il est muni de données enregistrées dans des secteurs qui s'étendent essentiellement perpendiculairement à cette direction et qui sont parallèles entre eux et disposés côte à côte dans la direction longitudinale du support de données, et que la tête de lecture peut elle aussi être déplacée perpendiculairement à cette direction.

12. Dispositif selon la revendication 11, caractérisé en ce que les secteurs ainsi que le mouvement de la tête de lecture sont rectilignes.

13. Dispositif selon la revendication 12, caractérisé en ce que la tête de lecture est disposée sur un chariot à coulisse.

14. Dispositif selon la revendication 11, caractérisé en ce que les secteurs sont disposés et le mouvement de la tête de lecture se fait selon un arc de cercle.

15. Dispositif selon la revendication 14, caractérisé en ce que la tête de lecture est disposée sur un bras pivotant.

16. Dispositif selon l'une des revendications 1 à 3, caractérisé en ce que la tête de lecture est disposée sur l'une des pièces de machine et le support de données est disposé et fixé au moyen d'un entraînement de manière telle sur l'autre pièce de machine qu'on peut lui imposer continuellement un mouvement relatif par rapport à la tête de lecture même lorsque les pièces de machine sont stationnaires l'une par rapport à l'autre.

17. Dispositif selon la revendication 16, caractérisé en ce que le support de données est réalisé de façon à présenter une symétrie de rotation et qu'il est disposé en rotation constante sur la pièce de machine correspondante.

18. Dispositif selon la revendication 17, caractérisé en ce que le support de données la tête de lecture est déplaçable d'une façon essentiellement radiale par rapport à la tête de lecture.

19. Dispositif selon la revendication 17, caractérisé en ce que le support de données est déplaçable par rapport à la tête de lecture d'une façon qui diverge de moins de 10 degrés par rapport à la direction radiale.

20. Dispositif selon la revendication 16, caractérisé en ce que la tête de lecture est disposée de façon fixe par rapport à l'une des pièces de machine et le support de données est réalisé sous forme d'une bande rectiligne et disposé au moyen d'un entraînement de manière telle sur l'autre pièce de machine qu'on peut lui imposer une oscillation périodique autour d'une position moyenne et que ce faisant on peut lui imposer un mouvement périodique par rapport à la tête de lecture même lorsque les pièces de machine sont stationnaires l'une par rapport à l'autre.

21. Dispositif selon la revendication 20, caractérisé en ce que le support de données est disposé avec sa direction longitudinale essentiellement parallèle à la direction du mouvement relatif des pièces de machine, qu'il est muni de données enregistrées de façon unidimensionnelle parallèlement à sa direction longitudinale et qu'il peut aussi être déplacé parallèlement à cette direction.

22. Dispositif selon la revendication 20, caractérisé en ce que le support de données est disposé avec sa direction longitudinale essentiellement parallèle à la direction du mouvement relatif des pièces de machine, qu'il est muni de données enregistrées dans des secteurs qui s'étendent essentiellement perpendiculairement à cette direction et qui sont parallèles entre eux et disposés côte à côte dans la direction longitudinale du support de données, et qu'il peut aussi être déplacé perpendiculairement à cette direction.

23. Dispositif selon la revendication 22, caractérisé en ce que les secteurs ainsi que le mouvement de la tête de lecture sont rectilignes.

24. Dispositif selon la revendication 23, caractérisé en ce que le support de données est disposé sur un chariot à coulisse.

25. Dispositif selon la revendication 22, caractérisé en ce que les secteurs sont disposés et que le mouvement de la tête de lecture se fait selon un arc de cercle.

26. Dispositif selon la revendication 25, caractérisé en ce que le support de données est disposé sur un bras pivotant.

27. Procédé de mise en oeuvre du dispositif selon la revendication 1, caractérisé en ce qu'on enregistre des données sur un support de données lisible magnétiquement ou optiquement et subdivisé en pistes et secteurs d'enregistrement, les données étant codées de telle façon que les données enregistrées dans chaque secteur sur chaque piste permettent d'identifier de façon univoque ce secteur particulier et cette piste particulière, on lit le support de données disposé sur l'une des pièces de machine au moyen de la tête de lecture disposée sur l'autre pièce de machine, et on met en relation les données lues avec une valeur de mesure de la position relative des pièces de machine l'une par rapport à l'autre, cette valeur de mesure pouvant servir à commander la position ou le déplacement des pièces de machine l'une par rapport à l'autre.

FIG. 1

FIG. 3

FIG. 2